# EUROPEAN PATENT SPECIFICATION

(11) **EP 4 226 174 B1**
(45) Date of publication and mention of the grant of the patent: **12.03.2025**
(21) Application number: 21786192.1
(22) Date of filing: 29.09.2021
(51) Int. Cl.: G01S 5/02, G01S 13/04, G01S 13/00, G01S 13/56, G01S 7/41, G01S 7/40, G01S 13/46

(54) **RADIO FREQUENCY BASED SENSING FOR DENSE NODE ARRANGEMENTS**
FUNKFREQUENZBASIERTE ABTASTUNG FÜR DICHTE KNOTENANORDNUNGEN
DÉTECTION À BASE DE FRÉQUENCE RADIO POUR AGENCEMENTS DE NOEUD DENSES

(30) Priority: 07.10.2020 US 202063088559 P; 30.10.2020 EP 20204819
(43) Date of publication of application: 16.08.2023
(73) Proprietor: Signify Holding B.V., 5656 AE Eindhoven (NL)
(72) Inventor: ALIAKSEYEU, Dzmitry, Viktorovich, 5656 AE Eindhoven (NL); TUMOLO, Massimo, 5656 AE Eindhoven (NL); DEIXLER, Peter, 5656 AE Eindhoven (NL)
(74) Representative: Verweij, Petronella Daniëlle
(86) International application number: PCT/EP2021/076864
(87) International publication number: WO 2022/073830

(56) References cited:
- WO-A1-2020/037399
- US-A1- 2012 146 788
- US-A1- 2019 384 409
- LIU JIAN ET AL: "Wireless Sensing for Human Activity: A Survey", IEEE COMMUNICATIONS SURVEYS & TUTORIALS, IEEE, USA, vol. 22, no. 3, 9 August 2019 (2019-08-09), pages 1629 - 1645, XP011807012, DOI: 10.1109/COMST.2019.2934489

## Description

### FIELD OF THE INVENTION

The present invention relates to a radio frequency (RF) system with multiple nodes, a RF super-system with two or more RF systems, a method for performing RF-based sensing in a RF system with multiple nodes, and a computer program product.

### BACKGROUND OF THE INVENTION

US 2019/0384409 A1 shows a system comprising wireless communication devices operable to transmit wireless signals through a space, a network-connected device associated with the space, and a computer device comprising one or more processors. The computer device is operable to perform operations comprising: obtaining channel information based on wireless signals transmitted through the space by one or more of the wireless communication devices, by operation of a gesture recognition engine, analyzing the channel information to detect a gesture in the space, identifying an action to be initiated in response to the detected gesture, and sending, to the network-connected device associated with the space, an instruction to perform the action. Detecting the gesture comprises using a time-frequency filter to detect a time-frequency signature of the gesture.

WO 2020/043592 A1 shows a system for selecting one or more devices in a wireless network for transmitting, receiving and/or processing a RF signal for presence and/or location detection. The system comprises at least one processor configured to determine a suitability of each of a plurality of devices for transmitting, receiving and/or processing a RF signal for presence and/or location detection, select a subset of devices from the plurality of devices based on the suitability determined for each of the plurality of devices, and instruct at least one of the subset of devices to act as a device for transmitting, receiving and/or processing a RF signal for presence and/or location detection.

WO 2020/037399 A1 discloses method for mapping boundaries of a given environment by a processor of a computer system, the method comprising: determining a trajectory of the body in the given environment over the given time period; and determining, based on the trajectory of the body in the given environment, one or more of an outer boundary of the given environment, and an inner boundary of the given environment. The method further comprising determining a pattern of movement of a body in the given environment in a given time period; and determining a functional identity of at least one zone in the given environment based on the pattern of movement of the body to obtain a mapped given environment.

### SUMMARY OF THE INVENTION

It can be seen as an object of the present invention to provide a RF system, a RF super-system, a method for performing RF-based sensing in a RF system, a computer program product for performing RF-based sensing in a RF system, and a computer readable medium which allow to improve performing RF-based sensing for recognizing activities of an object. The invention is set out in the appended set of claims.

A RF system comprising multiple nodes for performing RF-based sensing is presented. At least two of the multiple nodes are included in a dense node arrangement, wherein the dense node arrangement comprises a multi-node device and/or a group of densely packed nodes.

The RF system is configured for forming a first group of nodes including at least one node of the dense node arrangement, for forming a second group of nodes including the at least one node of the first group and at least one additional node of the dense node arrangement, for performing RF-based sensing by the first group in a first sensing area for detecting a first sensing event indicating a presence of an object in the first sensing area, and wherein if the first sensing event is detected, the radio frequency system is further configured for performing RF-based sensing by the second group in a second sensing area at least partially overlapping with the first sensing area for recognizing a second sensing event indicating an activity of the object if the first sensing event is detected.

Since the RF system performs RF-based sensing initially by the first group for detecting presence of the object in the first sensing area and subsequently if the presence of the object is detected, performs RF-based sensing by the second group in the second sensing area which at least partially overlaps with the first sensing area for recognizing an activity of the object, wireless interference generated by and costs for recognizing activities may be lowered. This may allow initially utilizing the first group with a lower bandwidth and subsequently the second group with a higher bandwidth. Utilizing a larger number of nodes of the dense arrangement allows to recognize the activities of the object as activity recognition requires a larger number of nodes in closer proximity to each other. Utilizing at least one of the nodes of the dense arrangement, e.g., only one node or few nodes, allows to reduce wireless interference with other functions of the nodes, e.g., exchanging data, as less wireless signals are transmitted for performing the RF-based sensing by the first group compared to performing RF-based sensing by the second group.

The nodes may be configured for performing a function, e.g., providing lighting, heating, cooling, or any other function besides performing RF-based sensing. One or more of the multiple nodes may be luminaires or lights.

A sensing area corresponds to a specific volume or space in which the RF-based sensing is performed. The first sensing area may be defined by the first group. The second sensing area may be defined by the second group. For example, locations of the nodes of a group may define the respective sensing area, e.g., such that the respective sensing area is formed between the locations of the nodes of the group. The first sensing area and the second sensing area overlap at least partially, as the second group includes the nodes of the first sensing area and at least one additional node of the dense node arrangement. The second sensing area may be smaller than the first sensing area, for example, the second sensing area may be a part of the first sensing area in which the object is located. The sensing areas may also be predefined. For example, the first sensing area and the second sensing area may be identical, e.g., corresponding to a specific volume, such as a certain room or floor in a building.

The first sensing event may indicate presence of one or more objects. An object may be, for example, a human, a robot, an animal, or any other type of object that may be detected by RF-based sensing. The second sensing event may also indicate one or more activities of the one or more objects. Activities may include, for example, a gesture, cooking, jumping, falling, breathing, or any other activity of the object.

Detecting presence of the object is to be understood as detecting that the object is present in the first sensing area. Recognizing the activity of the object is to be understood as detecting what the object is doing in the second sensing area, e.g., when an object, e.g., a user, such as a human, jumps into the first sensing area, initially presence of the user may be detected in the first sensing area by the first group and subsequently the activity of the user, namely jumping may be recognized using the second group, i.e., with a higher number of nodes.

A dense node arrangement is an arrangement of nodes with distances between the nodes which allow a higher resolution for the RF-based sensing which is sufficient for performing recognition of activities of the object. The dense node arrangement may be, for example, a multi-node device which may be in form of a multilight source, such as a chandelier including a certain number of nodes and/or a group of densely packed nodes for instance in form of downlights, e.g., within a kitchen. The dense node arrangement may have node density lower bounded by a threshold and/or the distance between the nodes is upper bounded by a threshold, such as the nodes are closely packed and with smaller distances between the nodes in the dense-node arrangement. For example, the lower bound for node density threshold maybe at least 5 nodes per square meter and/or the maximum distance between the nodes may be less than 20 cm. The dense node arrangement may have, for example, a node density of at least 5 nodes per square meter, e.g., at least 10 nodes per square meter. A distance between nodes may be, for example, between 10 cm to 30 cm. A higher node density allows a better resolution for performing RF-based sensing. Performing RF-based sensing by the RF system utilizing a higher node density may allow to recognize, for example, movements of different fingers due to its higher resolution. In contrast, if RF-based sensing is performed by the RF system utilizing a lower node density an arm movement may be recognized, but the RF system may not be able to differentiate between finger movements due to its lower resolution.

RF-based sensing allows detecting the presence of the object in the first sensing area and recognizing various activities of the object in the second sensing area. Sensing algorithms may detect and analyze how the object within the respective sensing area affects RF signals. RF signals are used for transmitting RF messages, for example, between pairs of nodes. RF-based sensing may be used as means for detecting and classifying the activity of the object in open spaces or buildings, like homes, offices, etc. For example, based on Zigbee messages being transmitted and received by the nodes in form of smart lights, RF-based sensing may determine presence of the object, e.g., in form of a user in a room for turning on the lights automatically and a respective gesture of the user for activating a certain lighting scene. Nodes in form of WiFi routers may, for example, recognize a breathing rate of the user, etc.

Analyzing the RF signals, e.g., for presence detection or activity recognition may be performed on the respective node or in a central control unit of the RF system. A reference list, e.g., a look-up table, including recognized activities may be stored in the node or the control unit. The reference list may be compared to a current activity of the object in order to recognize the current activity. Alternatively, machine learning (ML) or artificial intelligence (AI) based algorithms trained to extract features from disturbed RF messages may be utilized in order to recognize the activity of the object, e.g., a gesture of the user.

The underlying principle for RF-based sensing is that disturbances of RF signals in the respective sensing area are both a function of the physical elements in it, e.g., the moving object, as well as of the frequency of the RF signals. For example, a location and number of objects, their weight, size, movement direction and other properties of the object may influence the RF signals. Hence, disturbances caused by a small object, e.g., a small user, such as a child and a larger object, e.g., a larger user, such as an adult are different. This may allow not only to detect presence of an object, but also detecting which type of object, e.g., child or adult is present. Furthermore, disturbances caused by one object are different to disturbances caused by multiple objects.

When RF-based sensing hops through a series of very different frequency bands, e.g., from 2.4 GHz WiFi to 5 GHz WiFi and then to 60 GHz as used by the upcoming WiFi 6 standard, this may yield distinctively different passive sensing results. However, also frequency channels in the same frequency band, e.g., in 2.4 GHz WiFi Channel 1 at 2412 MHz and WiFi Channel 13 at 2472 MHz, will influence the RF-based sensing results.

The RF system may be configured for performing the RF-based sensing by the second group based on the first sensing event, e.g., in dependence of a detection result, such as detecting presence of a small user, a large user, a single user, or a group of users. For instance, if the activity indicated by the second sensing event is breathing, a child typically has a higher breathing rate than an adult and may require a higher resolution than an adult. In this case a message frequency for transmitting RF messages and/or frequency of the RF signal for performing RF-based sensing by the second group may be increased in order to provide a higher resolution. The message frequency defines how many RF messages are transmitted per time period, e.g., RF messages per second. A higher message frequency allows providing a higher resolution. The frequency of the RF signal defines the frequency of a wave used for transmitting the RF messages.

RF-based sensing can be performed, for example, by a group including at least two nodes by transmitting RF signals from one node to another node, i.e., between nodes of a pair of nodes, and analyzing the received RF signals. If the RF signals interact with one or more objects on their way between the nodes, the RF signals are disturbed, such as scattered, absorbed, reflected, or any combination thereof. These disturbances can be analyzed and used for performing RF-based sensing in order to detect the presence of one or more objects.

If a group includes only one node, the node may perform RF-based sensing by transmitting RF signals into a respective sensing area associated to the group, e.g., a specific volume, receiving reflected RF signals from the specific volume, and analyzing the reflected RF signals. For example, one antenna of an antenna array of the node can transmit the RF signals and another antenna of the antenna array of the same node can receive the reflected RF signals, which allows analyzing the reflected RF signals in the same node that transmitted the RF signals. RF-based sensing may also be performed in this manner by multiple nodes of the RF system.

Alternatively, or additionally, in a group including at least two nodes, one node may transmit RF signals into a respective sensing area associated to the group, e.g., a specific volume, and the reflected RF signals may be received and analyzed by another node of the group for performing RF-based sensing.

The disturbed and/or reflected RF signals can include an RF-based sensing fingerprint based on RF signal parameters, such as real and imaginary part of electrical permittivity and magnetic susceptibility. Different communication technologies have different absorption and reflection characteristics resulting in different RF-based sensing fingerprints.

The first group may be optimized for performing presence detection. The RF system may be configured for performing RF-based sensing in the first sensing area by the first group in order to detect the first sensing event indicating the presence of the object in the first sensing area based on a first setting of RF-based sensing parameters, e.g., including a first message frequency, for example, between 10 Hz and 300 Hz, such as 30 Hz. The first group may include exactly one node from the dense node arrangement. Additionally, the first group may include further nodes of the multiple nodes of the RF system. Performing RF-based sensing with a lower message frequency allows reducing wireless interference.

The second group may be optimized for performing activity recognition, e.g., gesture recognition. The RF system may be configured for performing RF-based sensing in the second sensing area by the second group in order to recognize the second sensing event indicating the activity of the object in the second sensing area based on a second setting of RF-based sensing parameters, e.g., including a second message frequency, for example, between 300 Hz and 5000 Hz, such as 1000 Hz. Performing RF-based sensing with a higher message frequency allows a higher resolution.

The RF system may be configured for calibrating the RF system, including the groups. Calibrating of the RF system may allow to improve the RF-based sensing, as an optimal number, physical location and configuration of nodes can be found, e.g., for performing presence detection and activity recognition, as well as proximity detection.

Calibrating may include arranging the nodes, such as placing the nodes at certain physical locations, forming the groups by including the nodes into the respective groups, and/or defining the sensing areas, e.g., including the first sensing area and the second sensing area. Placing the nodes at certain physical locations may include arranging the nodes with certain distances to each other. The second sensing area may be defined as context-aware areas, i.e., a certain activity is expected to be performed in the second sensing area, e.g., if the activity is cooking, the sensing area is defined to be the kitchen. The first sensing area may also be defined as context-aware area. Defining the sensing areas may allow to predefine the sensing areas and to reduce or avoid false positives, e.g., detecting presence of the object in a neighboring room. Detecting false positive may increase costs, e.g., as the second group performs activity recognition when no object is in the room and successful recognizing an activity is not possible. Furthermore, actions performed in reaction to detecting the presence of the object may be falsely performed, such as activating lighting in the room.

Calibrating of the RF system may be performed in dependence of the object. For example, different objects, e.g., in form of users may accept different latency or perform different activities, e.g. cooking, training, playing a game. This allows optimizing the RF system for performing RF-based sensing for sensing applications required by the users that typically use the RF system.

The RF system may be configured for optimizing the RF-based sensing based on user feedback. The RF system may be configured, for example, for asking the user to perform the activity, e.g., at different locations for calibrating RF-based sensing parameters for performing RF-based sensing including the message frequency and recognition algorithm when forming the second group.

The RF system may be configured for forming the first group of nodes such that the first group includes the at least one node of the dense node arrangement and at least one node which is not included in the dense node arrangement. Respective two nodes, one of the at least one node of the dense node arrangement and one of the at least one node which is not included in the dense node arrangement may form a node pair. The node pair may perform the RF-based sensing by exchanging RF signals between the two nodes of the node pair. This may improve the performance of the RF-based sensing as a node which is not included in the dense node arrangement has a higher distance from the at least one node of the dense node arrangement which may increase the size of the first sensing area if RF messages are transmitted between the node pair of the node not included in the dense node arrangement and the node included in the dense node arrangement.

The RF system may be configured for performing RF-based sensing by the second group in the second sensing area for recognizing the second sensing event upon detecting the first sensing event.

The RF system may also be configured for performing RF-based sensing by the second group in the second sensing area for recognizing the second sensing event if further conditions are fulfilled. One further condition may be, for example, that the object is in proximity to the dense node arrangement.

Upon detecting the first sensing event, the RF system may be configured for performing RF-based sensing in a third sensing area by at least the at least one node of the first group for detecting a third sensing event indicating a location of the object within proximity of the dense node arrangement. The third sensing area may at least partially overlap with the first sensing area and the second sensing area. The RF system may be configured for performing the RF-based sensing by the second group at the location of the object for recognizing the second sensing event if the first sensing event is detected and upon detecting the third sensing event.

This allows to reduce a number of nodes utilized by the RF system over time. Proximity detection and activity recognition typically require a higher resolution and thus a higher density of RF signals, e.g., provided by a higher number of nodes and/or by a higher message frequency. A higher density of RF signals increases resolution, but also increases wireless interference. Performing RF-based sensing for detecting the third sensing event indicating a location of the object within proximity of the dense node arrangement in a cascade, i.e., subsequently, to the presence detection of the object in the first sensing area, allows reducing wireless interference. Furthermore, costs may be reduces, as a smaller number of nodes may be utilized for performing RF-based sensing for detecting the presence of the object. In summary, the RF system allows to reduce a duration in which a larger number of nodes needs to be utilized for performing RF-based sensing for detecting proximity of the object to the dense node arrangement and for recognizing activities of the object as the first group may utilize few nodes for performing RF-based sensing for detecting presence of the object continuously until it detects presence. Only after detection of presence, a higher number of nodes needs to be utilized to increase the resolution of the RF-based sensing.

The third sensing event may indicate that the location of the object is in proximity to the dense node arrangement, i.e., that the object is in proximity to the dense node arrangement. The location of the object may be detected to be in proximity to the dense node arrangement, for example, if the location of the object is within a certain distance to, e.g., an outer surface or a center of the dense node arrangement. The location of the object within proximity of the dense node arrangement may, for example, be a location corresponding to a physical location, e.g., a coordinate position, such as a position of the object in an x-y-plane, or a relative position of the object with respect to the dense node arrangement, such as the object being in northern direction, eastern direction, southern direction, or western direction to a center of the dense node arrangement.

In order to determine the position of the object in the x-y-plane, at least three nodes may be utilized for a triangulation, e.g., if the first group includes at least three nodes, these may be utilized, else additional nodes of, for example, the second group may be utilized in addition. The RF system may also be configured for forming a third group of nodes including the at least one node of the first group and additional nodes, e.g., of the second group. If the first sensing area is not symmetrical with respect to the dense node arrangement, for example, two nodes may be utilized for determining a relative position of the object with respect to the dense node arrangement. For example, if beamforming and/or directional antenna arrays are used, wireless transmissions of the RF system may have directionality and a relative position of the object with respect to the dense node arrangement may be determined. For example, if WiFi is used as a communication protocol for performing RF-based sensing, WiFi channel state information (CSI) data which describes wireless multipath characteristics may be utilized for determining a distance of the object to the dense node arrangement, i.e., whether the object is in close proximity to the dense node arrangement.

The third sensing area may be predefined or defined by the nodes that perform RF-based sensing for detecting the third sensing event. The third sensing area may be identical to the first sensing area and the second sensing area.

Optionally in addition to the nodes of the first group, one or more of the nodes of the second group which are not included in the first group may perform RF-based sensing for detecting the third sensing event. This may allow improving resolution for performing proximity detection.

Detecting the third sensing event may also be used as trigger for control of nodes nearby the location of the object, e.g., activating the nodes if the object is in proximity to them or activating a control mode which allows controlling the respective node by physical controls, an app, or voice type commands. The nodes may be activated in order to be included in the second group and for performing RF-based sensing in the second sensing area.

The RF system may be configured for orchestrating the RF messages transmitted for performing RF-based sensing and other data exchange, for example, RF data messages, e.g., for lighting control, in order to reduce or avoid wireless interference. For example, RF messages, such as RF sensing messages may be transmitted in different time intervals than RF data messages and/or in other frequency channels. This allows to reduce or avoid wireless interference.

The RF system may be configured for forming the second group upon detecting the third sensing event and based on the location of the object. This allows improving RF-based sensing as a selection of the nodes included in the second group may be optimized such that the second sensing area is optimally covered by the node for recognizing the activity of the object.

The RF system may be configured for adapting the message frequencies of one or more nodes, e.g., all nodes, of the second group used for performing RF-based sensing by the second group. Pairs of nodes which exchange RF messages for performing RF-based sensing which are further away from the location of the object may perform RF-based sensing based on a lower message frequency than pairs of nodes which exchange RF messages for performing RF-based sensing which are closer to the location of the object. The message frequencies may be, for example, between 300 messages to 1000 messages per second, based on the location of the object with respect to the respective node or pair of nodes.

The RF system may be configured for forming the first group by selecting the nodes to be included in the first group based on one or more RF system parameters and/or the activity to be recognized by the second group. Alternatively, or additionally, the RF system may be configured for forming the second group by selecting the at least one additional node of the dense node arrangement to be included in the second group in addition to the nodes of the first group based on one or more RF system parameters and/or the activity to be recognized by the second group. RF system parameters may include, for example, a distance or distances between the nodes, a respective location of the nodes, or any other RF system parameter. The additional nodes added to the first group for forming the second group may be selected in order to optimize a coverage of the second sensing area.

The RF system may be configured for adjusting a message frequency for transmitting RF messages by the nodes of the RF system for performing RF-based sensing based on which sensing event is to be detected or recognized by the nodes. Additionally, or alternatively, the RF system may be configured for adjusting a directionality of RF message transmissions based on which sensing event is to be detected or recognized by the nodes.

The RF system may be configured, for example, upon detection of the third sensing event, for adjusting the message frequency of one or more of the nodes of the second group such that the activity of the object may be recognized.

The RF system may also be configured for adjusting a transmission power of the RF system based on a distance between the nodes of the second group and the object.

Alternatively, or additionally, the RF system may be configured for adjusting a transmission frequency for performing RF-based sensing, e.g., from 2.4 GHz to 5 GHz WiFi. This may allow improving RF-based sensing as, for example, 5 GHz WiFi is more suited for certain sensing application, such as breathing rate recognition as 5 GHz WiFi signals are spatially more confined than 2.4 GHz WiFi signals which bleed out and hence increase risk of picking up other movements in the vicinity.

The RF system may be configured while performing RF-based sensing by the second group in the second sensing area for recognizing the second sensing event, to stop performing RF-based sensing for detecting any other sensing events in the second sensing area.

The RF system may stop performing RF-based sensing for detecting any other sensing events in the second sensing area or also in the first and third sensing areas. The RF system may be configured to stop performing RF-based sensing for detecting the first sensing event and/or for detecting the third sensing event by the first group when the nodes of the second group perform RF-based sensing for recognizing the second sensing event. In other words, the RF system may be configured for deactivating presence detection and/or proximity detection when the second group performs RF-based sensing for recognizing the activity of the object. This allows to reduce wireless interference and optimize RF-based sensing as presence and proximity detection are not required while performing the recognition of the activity of the object.

The RF system may be configured for performing RF-based sensing by the second group in the second sensing area for recognizing the second sensing event until a stopping condition is fulfilled. The stopping condition may include one or more of that the second event is recognized, that a stopping event is detected, that a predetermined duration has passed since the second group started RF-based sensing in the second sensing area for recognizing the second sensing event, and that an inactivity of the object is recognized. This allows to ensure that the second group and thus a larger number of nodes is only temporarily performing RF-based sensing.

The stopping event is an event which causes the second group to stop performing RF-based sensing for recognizing the activity of the object. A timer may be reset to a predetermined duration and start to count down when an activity is detected. An inactivity of the object may be detected if the timer reaches zero. The stopping event may be, for example, if the object moves out of second sensing area. The stopping event may, for example, be combined with the stopping condition that an inactivity of the object is recognized. For example, if multiple activities are expected, e.g., an elderly person with dementia may go twice back to the toilet right after getting up as right after getting up she forgot her previous activity. This may allow ensuring that the second group performs RF-based sensing if a further activity is expected. The stopping event, e.g., for a second sensing event in form of breathing rate recognition during sleep monitoring may be, for example, waking up of the user for which breathing rate recognition is performed. This allows stopping to determine breathing rate of the user as soon as it is not required anymore as the user wakes up and sleep monitoring is ended.

The predetermined duration and the stopping event may be dependent on an activity indicated by the second sensing event. This may allow to tailor the duration and the stopping event to the expected ending of the activity of the user. The RF system may be configured, for example, for performing sleep stage monitoring of a user based on recognizing a breathing rate of the user by performing RF-based sensing, such as WiFi RF-based sensing. Waking up of the user, for example, may be a stopping event when the second event indicates a certain change in the breathing rate of the user. Changing breathing rates during the sleep of the user may also be used for monitoring the sleep of the user. This may allow to distinguish between REM sleep, non-REM sleep and a user being awake. The RF system may be configured for detecting a stopping event, e.g., recognizing that the user has transitioned from sleeping to an awake state. Upon detecting the stopping event, the RF system may stop performing RF-based sensing by the second group for sleep stage monitoring based on the breathing rate.

The RF system may be configured for performing RF-based sensing for detecting the first sensing event or the third sensing event when the second group stops performing RF-based sensing for detecting the second sensing event. In other words, when the activity recognition performed by the RF system is deactivated, the RF system may again perform presence detection or proximity detection. This allows to ensure that the minimal number of nodes required for the current sensing application is used and thus that wireless interference and costs are reduced.

The RF system may be configured for performing an action based on the detected first sensing event, the detected third sensing event, the recognized second sensing event, and/or contextual information. A primary function of the RF system or at least the one node of the first group may be, for example, performing an action in form of automatically activating one or more functions of the RF system, such as providing security or switching on and off lighting, based on presence detection. The RF system may be configured for performing a function upon detecting the first sensing event or the third sensing event and upon recognizing the second sensing event, e.g., activating or deactivating functions of nodes or adjusting operation parameters of the nodes, e.g. in form of luminaires, such as dimming lights if cooking is detected as an activity.

The RF system may be configured for performing more complex controls enabled by combining recognized activities with contextual information obtained from external devices. For example, if GPS on a smartphone of the user indicates that the user is not close to the RF system and presence of an object in form of a human is detected by the first group or opening of a main door, an alarm may be activated.

The second group may be configured for perform RF-based sensing by unicasting the RF messages. Unicasting may be performed between one or more nodes of the dense node arrangement and one or more nodes which are not included in the dense node arrangement.

The nodes of the second group may include directional antennas. This may allow to use beamforming in order to narrow the second sensing area.

The RF system may be configured for using different frequency channels and thus different frequencies for performing RF-based sensing by the second group for recognizing the second sensing event, e.g., switching from 2.4 GHz to 5 GHz or 60 GHz.

The RF system may be calibrated for performing RF-based sensing for detecting sensing events and recognizing activities of individual objects, such as users.

In a further aspect of the present invention a RF super-system including two or more RF systems according to at least one of the claims 1 to 9 of the RF system such that the RF super-system includes two or more dense node arrangements at different locations.

The RF super-system may be configured for forming several first groups and second groups in order to recognize second sensing events in various sensing areas within the RF super-system. The different locations may be in the same room, on the same floor or on different floors. The RF super-system may also perform RF-based sensing between floors, e.g., interfloor sensing, in which luminaires on a ceiling located underneath an object, e.g., in a room on a lower floor perform RF-based sensing of the object above it.

The RF super-system may perform, for example, health monitoring or sleep monitoring of two users in a double bed. Health monitoring and sleep monitoring may include or be performed by breathing rate recognition. In this case, for example, two dense node arrangements may be arranged in the same room at different sides of the double bed such that each one of the dense node arrangements may perform breathing rate recognition during sleep monitoring of one of the users. The dense node arrangements may include, for example, several LED strips around the double bed, a multi-lamp ceiling luminaire above the double bed, lamps on respective side tables at the sides of the double bed, reading lights mounted on a head of the double bed, or the like. The dense node arrangements may also include non-lighting devices. The dense node arrangements of the RF super-system may allow to recognize minute movements of the users' chests for recognizing breathing rates. Since the RF super-system allows forming the second groups for performing the RF-based sensing based on the location of the object, e.g., users, upon detecting the third sensing event, i.e., indicating a location of the user within proximity of the dense node arrangement, the users may be localized and appropriate groups for performing RF-based sensing may be formed that allow to perform sleep monitoring of the users when both users are sleeping in the double bed or even when only one of the users is sleeping and the other user is still awake. Sleep monitoring, e.g., including breathing rate recognition may allow to determine a health status of the user, for example, it may allow to detect whether the user has COVID-19.

In a further aspect of the present invention a method for performing RF-based sensing in a RF system comprising multiple nodes for performing RF-based sensing is presented. At least two of the multiple nodes are included in a dense node arrangement. The method comprises the steps:
- forming a first group of nodes including at least one node of the dense node arrangement,
- forming a second group of nodes including the at least one node of the first group and at least one additional node of the dense node arrangement,
- performing RF-based sensing by the first group in a first sensing area for detecting a first sensing event indicating a presence of an object in the first sensing area, and
- performing RF-based sensing by the second group in a second sensing area at least partially overlapping with the first sensing area for recognizing a second sensing event indicating an activity of the object if the first sensing event is detected.

The first group may be formed such that the first group includes the at least one node of the dense node arrangement and at least one node which is not included in the dense node arrangement.

The method may additionally comprise one or more of the steps:
- upon detecting the first sensing event, performing RF-based sensing in a third sensing area by at least the at least one node of the first group for detecting a third sensing event indicating a location of the object within proximity of the dense node arrangement, the third sensing area at least partially overlapping with the first sensing area and the second sensing area and wherein the RF-based sensing performed by the second group is performed at the location of the object for recognizing the second sensing event if the first sensing event is detected and upon detecting the third sensing event,
- forming the second group upon detecting the third sensing event and based on the location of the object,
- forming the first group by selecting the nodes to be included in the first group based on one or more RF system parameters and/or the activity to be recognized by the second group,
- forming the second group by selecting the at least one additional node of the dense node arrangement to be included in the second group in addition to the nodes of the first group based on one or more RF system parameters and/or the activity to be recognized by the second group,
- adjusting a message frequency for transmitting RF messages by the nodes of the RF system for performing RF-based sensing based on which sensing event is to be detected or recognized by the nodes,
- adjusting a directionality of RF messages by the nodes of the RF system for performing RF-based sensing based on which sensing event is to be detected or recognized by the nodes,
- while performing RF-based sensing by the second group in the second sensing area for recognizing the second sensing event, stop performing RF-based sensing for detecting any other sensing events in the second sensing area,
- performing RF-based sensing by the second group in the second sensing area for recognizing the second sensing event until a stopping condition is fulfilled, wherein the stopping condition includes one or more of that the second event is recognized, that a stopping event is detected, that a predetermined duration has passed since the second group started RF-based sensing in the second sensing area for recognizing the second sensing event, and that an inactivity of the object is recognized,
- performing RF-based sensing for detecting the first sensing event or the third sensing event when the second group stops performing RF-based sensing for detecting the second sensing event, and
- performing an action based on the detected first sensing events, the detected third sensing event, the recognized second sensing event, and/or contextual information.

In a further aspect of the present invention a computer program product for performing RF-based sensing in a RF system comprising multiple nodes for performing RF-based sensing is presented. At least two of the multiple nodes are included in a dense node arrangement. The computer program product comprises program code means for causing a processor to carry out the method according to at least one of the claims 11 to 13 of the method, when the computer program product is run on the processor.

In a further aspect a computer readable medium having stored the computer program product of claim 14 is presented. Alternatively or additionally the computer readable medium can have the computer program product according to the computer program product stored.

It shall be understood that the RF system of claim 1, the RF super-system of claim 10, the method of claim 11, the computer program product of claim 14, and the computer readable medium of claim 15 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily a node of a RF system;
Fig. 2 shows schematically and exemplarily an embodiment of the RF system performing presence detection;
Fig. 3 shows schematically and exemplarily an embodiment of the RF system performing proximity detection;
Fig. 4 shows schematically and exemplarily an embodiment of the RF system performing activity recognition;
Fig. 5 shows schematically and exemplarily an embodiment of a RF super-system; and
Fig. 6 shows an embodiment of the method for performing RF-based sensing in an RF system with a dense node arrangement.

### DETAILED DESCRIPTION OF EMBODIMENTS

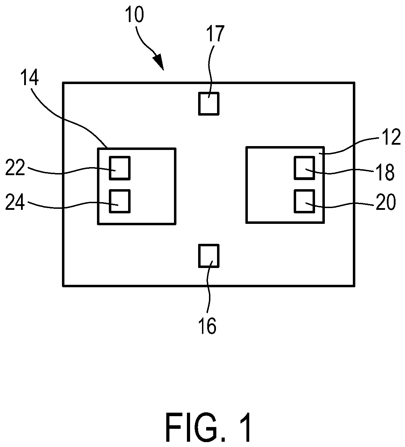

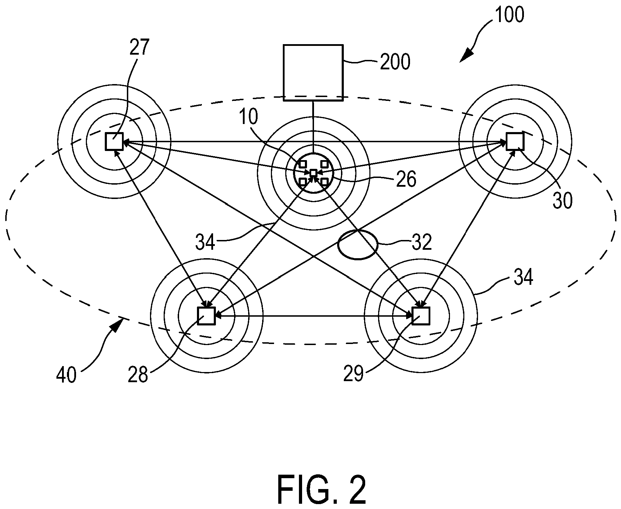

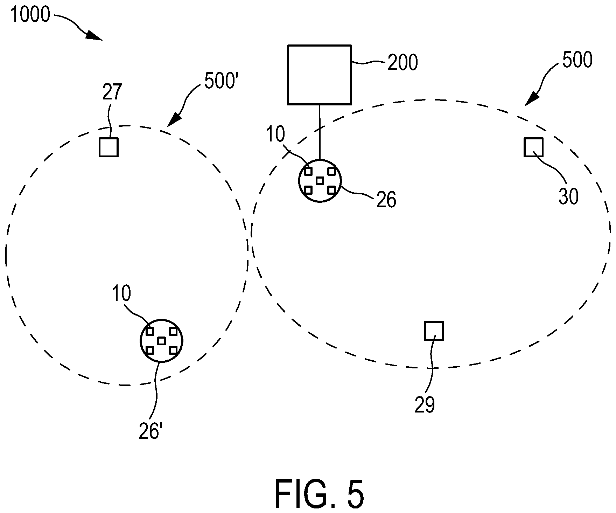

Fig. 1 shows schematically and exemplarily a node 10 of a RF system, e.g., connected lighting (CL) system 100 presented in Figs. 2 to 4 or CL system 400 or 400' presented in Fig. 5. The node 10 is a luminaire that provides lighting and that is used for performing RF-based sensing.

In the CL system, the nodes can for example be routers, bridges, lights, luminaires, switches, or sensors. This allows using the wireless infrastructure of the CL system to perform RF-based sensing, increasing the functionality of the CL system. The nodes may perform their functions, such as providing light and receiving control commands and additionally perform RF-based sensing. RF-based sensing can, for example, be used for presence detection and for activity recognition, such as breathing rate measurements, heart rate measurements, gesture recognition, fall recognition, or for performing other sensing applications.

The node 10 comprises a control unit 12, a transceiver unit 14, an antenna array 16, and a function unit in form of a lighting unit 17. Instead of an antenna array, a single antenna may also be included in the node.

The control unit 12 includes a processor 18 and a computer readable medium in form of memory 20.

In this embodiment, the transceiver unit 14 includes a WiFi transceiver 22 and a BLE transceiver 24. The WiFi transceiver 22 uses a WiFi communication technology according to one or more of the WiFi standards, e.g., IEEE 802.11ax, IEEE 802.11ay, and/or any other communication protocol in this embodiment. The BLE transceiver 24 uses BLE communication technology. In this embodiment, the BLE transceiver 24 can be operated with multiple different frequency channels. Various other communication technologies may be used, such as Zigbee, cellular radio, Thread, or any other communication technology.

The transceiver unit 14 uses the antenna array 16 for transmitting RF signals to nodes and receiving RF signals from nodes of the CL system for exchanging data wirelessly between the nodes and for performing RF-based sensing. RF signals transmitted from one node to another node are disturbed by objects within a specific volume between the nodes. The RF signals disturbed by an object in the specific volume can be analyzed in the control unit 12. The RF signals can use the WiFi communication technology or the BLE communication technology. The transceivers of the transceiver unit can be used for performing RF-based sensing by transmitting RF signals into a specific volume and by receiving and analyzing reflected RF signals from the specific volume by the same node. The RF signals can also be transmitted into the specific volume by one node and disturbed and/or reflected RF signals can be received and analyzed by another node.

The lighting unit 17 includes a driver and a light source, e.g., an light emitting diode (LED) array, for providing light.

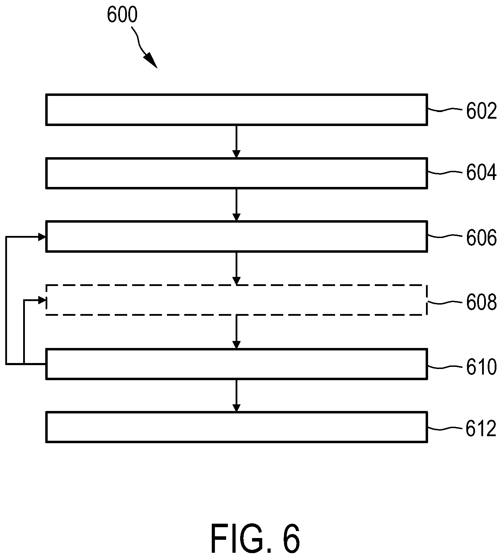

The memory 20 of the control unit 12 stores a computer program product for performing RF-based sensing. The computer program product includes program code means for causing processor 18 to carry out a method for performing RF-based sensing when the computer program product is run on the processor 18, e.g., the method as presented in Fig. 6. The memory 20 further includes a computer program product for operating the node 10 and optionally also the CL system, e.g., for controlling the functions of the node and controlling the functions of the nodes of the CL system, for example, in order to provide lighting as well as for performing RF-based sensing.

Furthermore, the memory 20 stores RF system parameters including, for example, a location of the nodes, areas of interest in which a sensing event is expected, a distance between the nodes, or any other RF system parameter. Additionally, the memory 20 stores settings of RF-based sensing parameters used for performing RF-based sensing, e.g., frequency channels, message frequencies, sensing areas, groups or any other RF-based sensing parameters.

Fig. 2 shows the CL system 100 performing presence detection. The CL system 100 comprises multiple nodes 10, 27, 28, 29, and 30 for performing RF-based sensing. Five nodes 10 of the multiple nodes are included in a dense node arrangement in form of chandelier 26. The nodes 10 in the chandelier 26 have a node density of 10 nodes per square meter. The node density in the dense node arrangement may also be, for example, at least 5 nodes per square meter or above 10 nodes per square meter. Chandelier 26 is furthermore connected to an external server 200. The CL system 100 is arranged in a room in a building (not shown). The CL system may also, for example, be arranged in an open space, such as a part of a streetlight system.

The external server 200 controls the CL system 100 in this embodiment, i.e., controlling the normal operation of the nodes of the CL system, e.g., providing lighting, as well as the RF-based sensing. RF messages are transmitted via RF signals 34 between the nodes. The RF messages can include RF data messages and RF sensing messages. The RF data messages, such as control commands, serve for activating or deactivating a function, such as providing lighting of a node. The RF sensing messages are used for performing RF-based sensing. In this embodiment, RF sensing messages are not exchanged between the nodes of the dense node arrangement, but only between other nodes and the nodes of the dense node arrangement. RF sensing messages may also be exchanged between each of the nodes. The CL system 100 performs RF-based sensing for various sensing applications, for example, in order to detect a presence of an object in form of a user 32.

RF-based sensing requires a different number of nodes and different message frequencies in dependence of the sensing application, such as presence detection, proximity detection, or activity recognition as different sensing applications require different levels of precision. For example, recognizing an activity of the user 32, such as a gesture, requires more nodes and a higher message frequency than detecting presence of the user 32 or a proximity of the user 32 to the dense node arrangement, e.g., the chandelier 26. Higher message frequencies and more nodes transmitting RF messages may lead to wireless interference between activity recognition and the normal operation of the CL system, e.g., data exchange for controlling the nodes of the CL system. In order to keep wireless interference low, the number of nodes performing RF-based sensing at the same time should be kept to a minimum required for performing the respective sensing application. The CL system is therefore calibrated and additional nodes are only activated for performing RF-based sensing in order to improve resolution, e.g., required for activity recognition, when needed. The calibration of the CL system includes finding an optimal number, physical location and configuration of nodes for presence and proximity detection, as well as activity recognition. This allows maintaining a timely and accurate detection resulting in a desired low-latency control of the nodes. The CL system is thus able to react on control commands transmitted via RF data messages, such as activating a lighting scene using a switch, or changing a color of a luminaire using a device running a respective app.

In the following the functionality of the CL system 100 is explained with respect to Figs. 2 to 4.

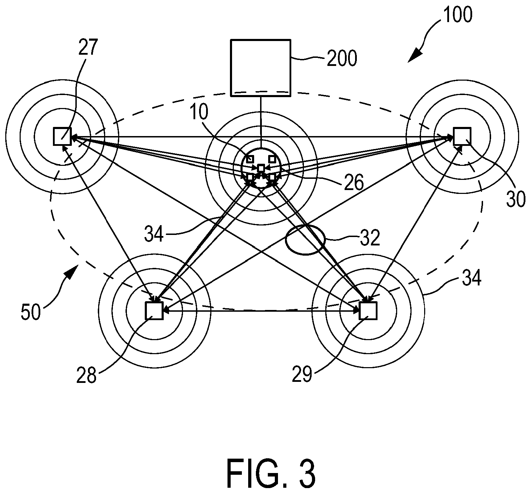

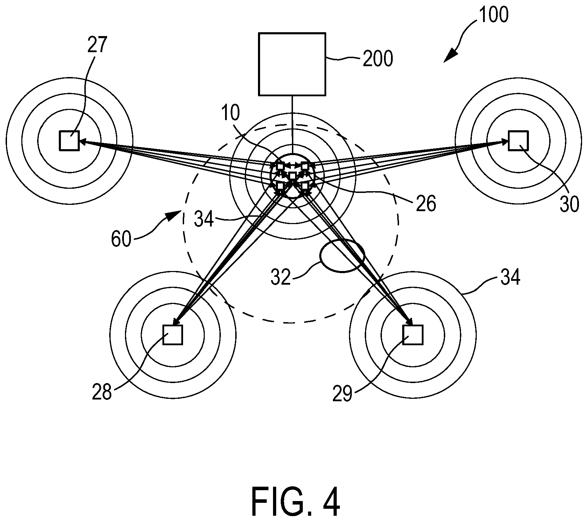

In a nutshell, the CL system 100 first calibrates groups for performing RF-based sensing for a specific sensing application in a sensing area associated to the respective group. A first group detects presence of an object in a first sensing area in Fig.2. Optionally performing presence detection is stopped, and a third group detects proximity of the object of the dense node arrangement and optionally determines a current location of the object to the dense node arrangement in Fig. 3. Presence detection and proximity detection are then stopped and a second group recognizes an activity of the object in Fig. 4. When activity recognition is not needed anymore, the activity recognition is stopped and presence detection or optionally proximity detection is performed again. An action can be performed by the CL system 100 upon detecting the first sensing event, the third sensing event and/or upon recognizing the second sensing event. The action performed by the CL system 100 may depend on the sensing event, e.g., when presence of the user is detected, lighting may be activated, when presence of the user is not detected anymore, lighting may be deactivated, and when a gesture is recognized a respective lighting scene may be activated. Additionally, contextual information may be considered for the action.

In the following we explain the steps performed by the CL system 100 in more detail.

At first, the CL system 100 performs a calibration by selecting nodes to be added to the respective groups for performing RF-based sensing for detecting or recognizing a respective sensing event. In this embodiment, three groups are formed, namely, a first group for presence detection, a third group for proximity detection, and a second group for activity recognition. A different number of groups may be formed, e.g., two groups.

The first group is optimized for presence detection. Nodes are included in the first group that allow optimal presence detection as shown in Fig. 2. In this embodiment, a center node of the chandelier 26 is included in the first group and the nodes 27, 28, 29, 30 which are not included in the chandelier 26, i.e., the first group includes one node of the dense node arrangement and several nodes which are not included in the dense node arrangement. The RF system may also form the first group of nodes such that it includes only one or more nodes of the dense node arrangement, i.e., not including nodes which are not included in the dense node arrangement. Furthermore, settings of RF-based sensing parameters of the nodes of the first group are adjusted, such as directionalities, frequency channels and message frequencies used by the nodes for performing RF-based sensing in order to optimize the nodes of the first group for presence detection. Finally, a first sensing area 40 associated to the first group is defined. In this embodiment, the first sensing area 40 depends on the location of the nodes included in the first group.

Nodes of the third group are selected in order to optimize proximity detection, e.g., detecting a location of the user within proximity of the dense node arrangement. In this embodiment, the third group includes the nodes of the first group and additionally two further nodes of the chandelier 26 as shown in Fig. 3. Other nodes may be included in the third group. Furthermore, the settings of RF-based sensing parameters of the nodes of the third group are adjusted in order to optimize them for proximity detection. Finally, a third sensing area 50 associated to the third group is defined which depends on the location of the nodes included in the third group.

The second group is optimized for recognizing activities. The second group includes all nodes of the first group and additionally all nodes of the chandelier 26 as shown in Fig. 4. The second sensing group is thus a superset of the first group. Other nodes may be included in the second group. The nodes to be included in the second group may be selected based on various parameters, such as the sensing application, as well as a distance of the user to the dense node arrangement. Furthermore, settings of RF-based sensing parameters of the nodes of the second group are adjusted in order to optimize activity recognition. Finally, a second sensing area 60 associated to the second group is defined. In this embodiment, the second sensing area depends on the location of the nodes included in the second group and in particular on the location of the dense node arrangement. The second sensing area is defined such that it is located in proximity to the dense node arrangement in order to optimally cover an area of interest in which the activities of the user will be performed.

The calibration may include acquiring feedback from the user 32 in order to optimize the groups for their respective sensing application. For example, the groups may be calibrated based on a physical configuration of the nodes, i.e., the positions of the nodes, and on the user preferences, e.g., which type of activities, e.g., cooking, training, playing a game, should be tracked or are expected to be performed by the user 32. The user 32 may support in calibrating the CL system 100 by providing feedback regarding a latency level that the user finds acceptable. Furthermore, the CL system may be trained to recognize the activity of the user based on activities performed by the user in different parts of the room. The user may generate training data in this manner. The training data may be labeled and provided as input data to an activity recognition algorithm, e.g., a machine learning (ML) algorithm, for example, including a neural network or the like. This may be used when adjusting the directionalities, frequency channels, and message frequencies as well as when selecting the nodes to be included in the respective groups to optimize the groups for performing RF-based sensing for a respective sensing application.

The RF system may form the second group upon detecting the third sensing event and based on the location of the object, i.e., during operation of the CL system 100 or in other words on the fly while the CL system 100 performs RF-based sensing.

Once the CL system 100 is calibrated, it may be used for performing improved RF-based sensing.

Initially, the CL system 100 performs RF-based sensing by the first group in the first sensing area 40 for detecting the first sensing event indicating a presence of the user 32 in the first sensing area 40 as shown in Fig. 2. In this embodiment, the center node of the chandelier 26 and the nodes 27, 28, 29, and 30 perform RF-based sensing with a message frequency of 30 Hz sufficient for presence detection. This sensing application does not interfere with the normal operation of the CL system 100, i.e., providing lighting and controlling the CL system 100. Detecting presence may be a default operation mode for the RF system. Detecting presence may be used, for example, to activate a security alert or simply for automatically switching lights on and off, i.e., activating and deactivating a lighting function of the nodes.

When presence is detected, in this embodiment, the CL system 100 activates the function of the luminaires to provide lighting. The RF system may also perform any other action upon detecting the first sensing event indicating presence of an object, e.g., the user. The RF system may be configured for performing an action based on the detected first sensing event and/or contextual information.

Furthermore, upon detecting the first sensing event, the CL system 100 performs RF-based sensing in the third sensing area 50 by the third group for detecting the third sensing event indicating a location of the user 32 within proximity of the dense node arrangement. The location may be a physical location, e.g., with a direction and distance from the dense node arrangement, or a direction such as north, east, south or west of the node arrangement. The third group has a higher node density than the first group as two additional nodes in the dense node arrangement are included. Proximity detection requires a slightly higher resolution than presence detection and can be enabled due to the higher node density of the third group compared to the first group. Furthermore, the third sensing area 50 partially overlaps with the first sensing area 40 and the second sensing area 60.

Proximity is detected if the user is within a certain distance of the dense node arrangement, e.g., within a distance of 4 m to an outer surface of the dense node arrangement or a center of the dense node arrangement, e.g., within a distance of 4 m to the center node of the chandelier 26.

Proximity detection may be leveraged to provide individual control of the nodes nearby the location of the user. For example, it may be used for physical controls, app, or voice type of commands. The RF system may be configured for performing an action upon detecting the third sensing event and/or based on the detected third sensing event.

In this embodiment, the second group performs RF-based sensing in the second sensing area 60 for recognizing the second sensing event indicating an activity of the user 32 upon detection of the third sensing event, i.e., if the location of the user is in proximity to the dense node arrangement. Since the proximity is detected also the first sensing event, i.e., presence of the user, is detected. The second group only performs RF-based sensing if the user 32 is in proximity to the dense node arrangement, i.e. chandelier 26 in this embodiment, since activity recognition requires a higher density of co-located nodes, i.e., the nodes in the dense node arrangement. Additionally, the message frequency for performing RF-based sensing by the second group is increased compared to the third group. This may allow recognizing activities, such as gestures of the user 32. Due to the higher message frequency, wireless interference may be higher. Therefore, the CL system 100 may coordinate or orchestrate transmissions of RF messages, including RF data messages for controlling the CL system 100, as well as RF sensing messages for performing RF-based sensing. This orchestrated transmission of the RF messages further allows reducing wireless interference. Furthermore, the second group only temporally, e.g., as short as possible, performs RF-based sensing in order to reduce or avoid wireless interference.

In this embodiment, the second group performs the RF-based sensing at the location of the user 32. The second sensing area 60 at least partially overlaps with the first sensing area 40.

While performing RF-based sensing by the second group in the second sensing area 60, the CL system 100 stops performing RF-based sensing for other sensing applications. Different sensing applications may be performed in parallel. Performing RF-based sensing for different sensing applications may include an orchestration of the transmission of different RF sensing messages included in the transmitted RF signals, such that wireless interference is reduced or avoided.

The CL system 100 processes recognized activities, such as gaits or gestures locally in the nodes in this embodiment. The activities may also be recognized remotely, such as on server 200. Furthermore, different activities may be aggregated for a certain time before processing them. The aggregated activities may be processed together for recognizing them. The activities may be aggregated, e.g., in order to provide context information to the aggregated activities. For example, combinations of gestures may be recognized for allowing to provide complexer commands. The recognized activities may be used as a lookup key against a set of references. Artificial intelligence (AI)-based algorithms may enable a more accurate and complex recognition.

The RF system may be configured for performing an action based on the recognized second sensing event and possibly contextual information. For example, nodes may be dimmed up if a cooking action is detected or turned red if a romance action is detected. This allows to users to use simple gestures like waving to turn on the lights in a specific setting, e.g., color setting or dimming level. More complex context-aware actions may be performed based on additional contextual information. For example, more complex controls may be enabled by combining the recognized activities with contextual information obtained by other devices, e.g., a smartphone. If no user is detected to be at home, for example, due to contextual information in form of GPS information of the user's smartphone and opening of a main door is detected, an alarm signal may be triggered and provided to the smartphone of the user and/or to another external server, such as a security company.

The nodes of the RF system may utilize directional antennas, e.g., for beamforming, for performing RF-based sensing in order to provide a narrower second sensing area 60.

The message frequency between the nodes of the dense node arrangement and the node closest to the user 32, e.g., node 29 may be higher than for the other nodes 27, 28, and 30. The message frequency between the nodes of the dense node arrangement and node 29 may be, for example, 1000 messages per second. The message frequency between the dense node arrangement and the other nodes 27, 28, and 30 may be, for example, 300 messages per second. This may allow to further improve the resolution in the area of interest, i.e., at the location of the user where activity of the user is expected.

The frequency channels of the nodes of the second group may also be adjusted. For example, frequency channels for WiFi, may be adjusted from 2.4 GHz to 5 GHz or 60 GHz. The higher frequencies may improve the activity recognition, such as gesture recognition.

In this embodiment, the second group performs RF-based sensing for recognizing the activity of the user only temporally, namely, until a stopping condition is fulfilled. The stopping condition is that the second event is recognized and that an additional stopping event is detected. The stopping event is that the user performs a certain stopping gesture and that this stopping gesture is recognized by the second group. The stopping condition may also include, for example, one or more of that the second event is recognized, that a stopping event is detected, that a predetermined duration has passed since the second group started radio frequency based sensing in the second sensing area for recognizing the second sensing event, and that an inactivity of the object is recognized. The stopping event may be defined, for example, by the user, e.g., during calibration of the CL system 100. The stopping event may also be, for example, that the user leaves the second sensing area.

In this embodiment, the CL system 100 performs RF-based sensing for detecting the first sensing event, i.e., presence detection, upon the second group stopping to perform RF-based sensing for detecting the second sensing event. The RF system may perform RF-based sensing for detecting the first sensing event or the third sensing event when the second group stops performing RF-based sensing for detecting the second sensing event. Whether the first group or the third group performs RF-based sensing for detecting the first sensing event or the third sensing event may depend on the stopping condition. For example, the user may leave the second sensing area. In this case, the first group may detect whether the user is still present in the first sensing area and the third group may subsequently detect whether the user comes back into proximity of the dense node arrangement. Alternatively, for example, the third group may detect whether the user is still in proximity to the dense node arrangement and if the user is not in proximity to the dense node arrangement, the first group may perform RF-based sensing to detect, whether the user is still in the first sensing area.

In which the second group stopped performing RF-based sensing, the second group may only perform RF-based sensing again for recognizing the second sensing event if an additional restarting condition is fulfilled, e.g., that a predetermined duration has passed since the second group stopped performing RF-based sensing. This may allow to decrease wireless interference, as performing RF-based sensing by the second group may be avoided after the second sensing event is already recognized and the user is still in proximity to the dense node arrangement.

In which the second group stopped performing RF-based sensing, the second group may perform RF-based sensing again for recognizing the second sensing event based on the second sensing event. For example, if the second sensing event indicates an activity in form of a gesture command such as "turn on entertainment lights" for turning on nodes in form of lights using a specific lighting scene or "go to sleep" for turning of nodes in form of lights, it is unlikely that there will be a subsequent second sensing event to be recognized. If, for example, a user arrives at home and enters the building, multiple sensing events may be expected. For example, a first gesture may be recognized for turning on lights in the entrance, followed by a second gesture pointing towards the living room for turning on lights in the living room. In another example, a user may enter the bathroom. In this case a "turn on" gesture is likely to be followed after a few minutes by a "turn off" gesture.

Fig. 5 shows a RF super-system 1000 including two RF systems in form of CL systems 500 and 500' with two dense node arrangements in form of chandeliers 26 and 26' at different locations.

CL system 500 includes chandelier 26 and nodes 29 and 30. CL system 500' includes chandelier 26' and node 27. In this embodiment, the nodes of the RF super-system 1000 exchange data, e.g., RF messages, such as RF data messages and RF sensing messages for performing RF-based sensing. Chandelier 26 is furthermore connected to an external server 200. The external server 200 can be used for controlling the RF super-system 1000. Alternatively, the nodes of the RF super-system 1000 may also be locally controlled, e.g., via switches or remote control (not shown). The CL systems 500 and 500' have a similar functionality as described with respect to the embodiment of the CL system 100 shown in Figs. 2 to 4.

Fig. 6 shows an embodiment of the method 600 for performing RF-based sensing in a RF system comprising multiple nodes for performing RF-based sensing, e.g., the CL system 100 shown in Figs. 2 to 4. At least two of the multiple nodes are included in a dense node arrangement. At first the method calibrates the RF system and therefore forms groups of nodes.

In step 602, a first group of nodes is formed. In this embodiment, the first group includes at least one node of the dense node arrangement and at least one node which is not included in the dense node arrangement. The first group may also include only at least one node of the dense node arrangement. The first group is formed by selecting the nodes to be included in the first group based on one or more radio frequency system parameters. The nodes may additionally, or alternatively be selected based on a second sensing event to be recognized by the second group. The nodes of the first group are configured by adjusting their directionality, frequency channels and message frequencies used for performing RF-based sensing based on the first sensing event, i.e., presence detection. Furthermore, a first sensing area is defined. In this embodiment, the first sensing area depends on the location of the nodes of the first group.

In step 604, a second group of nodes is formed. The second group of nodes includes the nodes of the first group and at least one additional node of the dense node arrangement. The second group is formed by selecting the at least one additional node of the dense node arrangement to be included in the second group in addition to the nodes of the first group based on one or more radio frequency system parameters. The nodes may additionally, or alternatively be selected based on the second sensing event to be recognized by the second group. The nodes of the second group are configured by adjusting their directionality, frequency channels and message frequencies used for performing RF-based sensing based on the second sensing event to be recognized. Furthermore, a second sensing area is defined.

In step 606, the first group performs RF-based sensing in a first sensing area for detecting a first sensing event. The first sensing event indicates a presence of a user in the first sensing area. The first sensing event may also indicate presence of any other object in the first sensing area. Step 606 is performed until the first sensing event is detected, i.e., until a user is detected. Step 606 is then stopped, i.e., presence detection is stopped and optionally step 608 is performed or step 610 is performed.

In step 608, upon detecting the first sensing event, RF-based sensing is performed in a third sensing area by the nodes of the first group for detecting a third sensing event. The third sensing event indicates a location of the user within proximity of the dense node arrangement. The third sensing area at least partially overlaps with the first sensing area. Additional nodes, e.g., nodes of the second group, may be added to the first group for improving the resolution. A third group may be formed for performing RF-based sensing for detecting the third sensing event. Upon detecting the location of the user to be within proximity of the dense node arrangement, here within a certain distance, such as 4 m from a center of the dense node arrangement, step 608 is stopped, i.e., proximity detection is stopped.

Step 608 is optional. Instead step 610 may be performed upon detecting presence of the user in the first sensing area.

The second group is formed or adjusted upon detecting the third sensing event and based on the location of the object.

In step 610, the second group performs RF-based sensing in a second sensing area for recognizing a second sensing event indicating an activity of the user. In this embodiment, the second sensing area is a subset of the first sensing area and narrowed down by beamforming to an area around the location of the user. The second sensing area may at least partially overlap with the first sensing area and optionally with the third sensing area if proximity detection is performed. Furthermore, the second group may perform RF-based sensing at the location of the object for recognizing the second sensing event if the first sensing event was detected and upon detecting the third sensing event. In this embodiment, the activity to be recognized is a gesture of the user for controlling the RF system. Different gestures may allow activating different lighting scenes.

In this embodiment, no other RF-based sensing is performed for detecting other sensing events while RF-based sensing is performed by the second group in the second sensing area for recognizing the second sensing event.

The second group performs RF-based sensing in the second sensing area for recognizing the second sensing event until a stopping condition is fulfilled. In this embodiment, the stopping condition is that the second event is recognized, i.e., the gesture of the user for controlling the RF system is recognized, and that additionally a stopping event is recognized. In this embodiment, the stopping event is either that the user left the first sensing area or the location of the user is not within the proximity of the dense node arrangement anymore. Leaving of the user of the first sensing area may be detected, for example, if no presence of the user is detected in the first sensing area by performing RF-based sensing by the first group and detecting that the location of the user is not within the proximity of the dense node arrangement anymore may, for example, be detected by performing RF-based sensing in the third sensing area by at least the at least one node of the first group. The stopping condition may, for example, include that a predetermined duration has passed since the last gesture has been recognized. The stopping condition may include one or more of that the second event is recognized, that a stopping event is detected, that a predetermined duration has passed since the second group started radio frequency based sensing in the second sensing area for recognizing the second sensing event, and that an inactivity of the object is recognized.

If step 610 is stopped, either RF-based sensing for detecting the first sensing event, i.e., step 606, or the third sensing event, i.e., step 608, is performed. Which step is performed, depends on the stopping condition fulfilled, e.g., if the user leaves the first sensing area, step 606, i.e., presence detection is performed. If the user is still present in the first sensing area, but her location is not in proximity of the dense node arrangement anymore, step 608, i.e., proximity detection is performed.

In step 612, an action is performed upon and based on the detected second sensing event, namely a lighting scene is activated in dependence of the recognized gesture. Step 610 may be performed in parallel to step 612 if it has not been stopped, i.e., several gestures may be recognized subsequently for adjusting the lighting scene. Other actions may be performed based on the detected first sensing events, the detected third sensing event, the recognized second sensing event, and/or contextual information. The other actions may also be performed, for example, upon detecting the first sensing event, the third sensing event and/or the contextual information and/or recognizing the second sensing event.

While the invention has been illustrated and described in detail in the drawings and foregoing description, such illustration and description are to be considered illustrative or exemplary and not restrictive; the invention is not limited to the disclosed embodiments. For example, it is possible to operate the invention in an embodiment wherein the RF system is a heating ventilating air-conditioning (HVAC) system, or any other smart home or building managing system (BMS).

Other variations to the disclosed embodiments can be understood and effected by those skilled in the art in practicing the claimed invention, from a study of the drawings, the disclosure, and the appended claims.

In the claims, the word "comprising" and "including" does not exclude other elements or steps, and the indefinite article "a" or "an" does not exclude a plurality.

A single unit, processor, or device may fulfill the functions of several items recited in the claims. The mere fact that certain measures are recited in mutually different dependent claims does not indicate that a combination of these measures cannot be used to advantage.

Operations like forming a first group of nodes including at least one node of the dense node arrangement, forming a second group of nodes including the at least one node of the first group and at least one additional node of the dense node arrangement, performing RF-based sensing by the first group in a first sensing area for detecting a first sensing event indicating a presence of an object in the first sensing area, performing RF-based sensing by the second group in a second sensing area at least partially overlapping with the first sensing area for recognizing a second sensing event indicating an activity of the object if the first sensing event is detected, et cetera performed by one or several units, nodes, or devices can be performed by any other number of units, nodes, or devices. These operations and/or the method can be implemented as program code means of a computer program and/or as dedicated hardware.

A computer program product may be stored/distributed on a suitable medium, such as an optical storage medium, or a solid-state medium, supplied together with or as part of other hardware, but may also be distributed in other forms, such as via the Internet, Ethernet, or other wired or wireless telecommunication systems.

Any reference signs in the claims should not be construed as limiting the scope.

The present invention regards performing RF-based sensing in a RF system comprising multiple nodes of which at least two nodes are included a dense node arrangement. A first group of nodes including at least one node of the dense node arrangement and a second group including the at least one node of the first group and at least one additional node of the dense node arrangement are formed. RF-based sensing is performed by the first group in a first sensing area for detecting a first sensing event indicating a presence of an object in the first sensing area. If the first sensing event is detected, RF-based sensing is performed by the second group in a second sensing area at least partially overlapping with the first sensing area for recognizing a second sensing event indicating an activity of the object.

## Claims

1. A radio frequency system (100; 500, 500') comprising multiple nodes (10, 27, 28, 29, 30) for performing radio frequency based sensing,
wherein at least two of the multiple nodes (10, ..., 30) are included in a dense node arrangement (26), wherein the dense node arrangement comprises a multi-node device and/or a group of densely packed nodes; and
wherein the radio frequency system (100; 500, 500') is configured:
- for forming a first group of nodes (10, ..., 30) including at least one node (10) of the dense node arrangement (26),
- for forming a second group of nodes (10, ..., 30) including the at least one node (10) of the first group and at least one additional node (10) of the dense node arrangement (26),
- for performing radio frequency based sensing by the first group in a first sensing area (40) for detecting a first sensing event indicating a presence of an object (32) in the first sensing area (40), and wherein if the first sensing event is detected, the radio frequency system (100; 500, 500') is further configured:
- for performing radio frequency based sensing by the second group in a second sensing area (60) at least partially overlapping with the first sensing area (40) for recognizing a second sensing event indicating an activity of the object (32).

2. The radio frequency system (100; 500, 500') according to claim 1, wherein the radio frequency system (100; 500, 500') is configured for forming the first group of nodes such that the first group includes the at least one node (10) of the dense node arrangement (26) and at least one node (27, 28, 29, 30) which is not included in the dense node arrangement (26).

3. The radio frequency system (100; 500, 500') according to claim 1 or 2, wherein upon detecting the first sensing event, the radio frequency system (100; 500, 500') is configured for performing radio frequency based sensing in a third sensing area (50) by at least the at least one node (10) of the first group for detecting a third sensing event indicating a location of the object (32) within proximity of the dense node arrangement (26), the third sensing area (50) at least partially overlapping with the first sensing area (40) and the second sensing area (60), and
wherein the radio frequency system (100; 500, 500') is configured for performing the radio frequency based sensing by the second group at the location of the object (32) for recognizing the second sensing event if the first sensing event is detected and upon detecting the third sensing event.

4. The radio frequency system according to claim 3, wherein the radio frequency system (100; 500, 500') is configured for forming the second group upon detecting the third sensing event and based on the location of the object (32).

5. The radio frequency system (100; 500, 500') according to at least one of the claims 1 to 4, wherein the radio frequency system (100; 500, 500') is configured for adjusting a message frequency for transmitting radio frequency messages by the nodes (10, ..., 30) of the radio frequency system (100; 500, 500') for performing radio frequency based sensing, a directionality of radio frequency message transmissions, or both the message frequency for transmitting radio frequency messages by the nodes (10, ..., 30) of the radio frequency system (100; 500, 500') for performing radio frequency based sensing and the directionality of the radio frequency message transmissions, based on which sensing event is to be detected or recognized by the nodes (10, ..., 30).

6. The radio frequency system (100; 500, 500') according to at least one of the claims 1 to 5, wherein the radio frequency system (100; 500, 500') is configured while performing radio frequency based sensing by the second group in the second sensing area (60) for recognizing the second sensing event, to stop performing radio frequency based sensing for detecting any other sensing events in the second sensing area (60).

7. The radio frequency system (100; 500, 500') according to at least one of the claims 1 to 6, wherein the radio frequency system (100; 500, 500') is configured for performing radio frequency based sensing by the second group in the second sensing area (60) for recognizing the second sensing event until a stopping condition is fulfilled including one or more of
- that the second event is recognized,
- that a stopping event is detected,
- that a predetermined duration has passed since the second group started radio frequency based sensing in the second sensing area (60) for recognizing the second sensing event, and
- that an inactivity of the object (32) is recognized.

8. The radio frequency system (100; 500, 500') according to at least one of the claims 1 to 7, wherein the radio frequency system (100; 500, 500') is configured for performing radio frequency based sensing for detecting the first sensing event or the third sensing event when the second group stops performing radio frequency based sensing for detecting the second sensing event.

9. The radio frequency system (100; 500, 500') according to at least one of the claims 1 to 8, wherein the radio frequency system (100; 500, 500') is configured for performing an action based on the detected first sensing event, the detected third sensing event, the recognized second sensing event, and/or contextual information.

10. A radio frequency super-system (1000) including two or more radio frequency systems (500, 500') according to at least one of the claims 1 to 9 such that the RF super-system (1000) includes two or more dense node arrangements (26, 26') at different locations.

11. A method for performing radio frequency based sensing in a radio frequency system (100; 500, 500') comprising multiple nodes (10, ..., 30) for performing radio frequency based sensing, wherein at least two of the multiple nodes (10, ..., 30) are included in a dense node arrangement (26), wherein the dense node arrangement comprises a multi-node device and/or a group of densely packed nodes;
wherein the method comprising the steps:
- forming a first group of nodes including at least one node (10) of the dense node arrangement (26),
- forming a second group of nodes including the at least one node (10) of the first group and at least one additional node (10) of the dense node arrangement (26),
- performing radio frequency based sensing by the first group in a first sensing area (40) for detecting a first sensing event indicating a presence of an object (32) in the first sensing area (40), and wherein if the first sensing event is detected, the method comprises the step of- performing radio frequency based sensing by the second group in a second sensing area (60) at least partially overlapping with the first sensing area (40) for recognizing a second sensing event indicating an activity of the object (32).

12. The method according to claim 11, wherein the first group is formed such that the first group includes the at least one node (10) of the dense node arrangement (26) and at least one node (27, 28, 29, 30) which is not included in the dense node arrangement (26).

13. The method according to claim 11 or 12, comprising one or more of the steps:
- upon detecting the first sensing event, performing radio frequency based sensing in a third sensing area (50) by at least the at least one node (10, ..., 30) of the first group for detecting a third sensing event indicating a location of the object (32) within proximity of the dense node arrangement (26), the third sensing area (50) at least partially overlapping with the first sensing area (40) and the second sensing area (60), and wherein the radio frequency based sensing performed by the second group is performed at the location of the object (32) for recognizing the second sensing event if the first sensing event is detected and upon detecting the third sensing event,
- forming the second group upon detecting the third sensing event and based on the location of the object (32),
- forming the first group by selecting the nodes (10, ..., 30) to be included in the first group based on one or more radio frequency system parameters and/or the second sensing event to be recognized by the second group,
- forming the second group by selecting the at least one additional node (10) of the dense node arrangement (26) to be included in the second group in addition to the nodes (10, ..., 30) of the first group based on one or more radio frequency system parameters and/or the second sensing event to be recognized by the second group,
- adjusting a message frequency for transmitting radio frequency messages by the nodes (10, ..., 30) of the radio frequency system (100; 500, 500') for performing radio frequency based sensing based on which sensing event is to be detected or recognized by the nodes (10, ..., 30),
- adjusting a directionality of radio frequency messages by the nodes (10, ..., 30) of the radio frequency system (100; 500, 500') for performing radio frequency based sensing based on which sensing event is to be detected or recognized by the nodes (10, ..., 30),
- while performing radio frequency based sensing by the second group in the second sensing area for recognizing the second sensing event, stop performing radio frequency based sensing for detecting any other sensing events in the second sensing area (60),
- performing radio frequency based sensing by the second group in the second sensing area (60) for recognizing the second sensing event until a stopping condition is fulfilled, wherein the stopping condition includes one or more of that the second event is recognized, that a stopping event is detected, that a predetermined duration has passed since the second group started radio frequency based sensing in the second sensing area (60) for recognizing the second sensing event, and that an inactivity of the object (32) is recognized,
- performing radio frequency based sensing for detecting the first sensing event or the third sensing event when the second group stops performing radio frequency based sensing for detecting the second sensing event, and
- performing an action based on the detected first sensing events, the detected third sensing event, the recognized second sensing event, and/or contextual information.

14. A computer program product for performing radio frequency based sensing in a radio frequency system (100; 500, 500') comprising multiple nodes (10, ..., 30) for performing radio frequency based sensing, wherein at least two of the multiple nodes (10, ..., 30) are included in a dense node arrangement (26), wherein the computer program product comprises program code means for causing a processor to carry out the method according to at least one of the claims 11 to 13, when the computer program product is run on the processor.

15. A computer readable medium having stored the computer program product of claim 14.

## Patentansprüche

1. Hochfrequenzsystem (100; 500, 500'), umfassend mehrere Knoten (10, 27, 28, 29, 30) zum Durchführen einer hochfrequenzbasierten Erfassung, wobei mindestens zwei der mehreren Knoten (10, ..., 30) in einer dichten Knotenanordnung (26) enthalten sind, wobei die dichte Knotenanordnung eine Mehrknotenvorrichtung und/oder eine Gruppe dicht gepackter Knoten umfasst; und wobei das Hochfrequenzsystem (100; 500, 500') konfiguriert ist:
- zum Bilden einer ersten Gruppe von Knoten (10, ..., 30), die mindestens einen Knoten (10) der dichten Knotenanordnung (26) enthält,
- zum Bilden einer zweiten Gruppe von Knoten (10, ..., 30), die den mindestens einen Knoten (10) der ersten Gruppe und mindestens einen weiteren Knoten (10) der dichten Knotenanordnung (26) enthält,
- zum Durchführen der hochfrequenzbasierten Erfassung durch die erste Gruppe in einem ersten Erfassungsbereich (40) zum Detektieren eines ersten Erfassungsereignisses, das eine Anwesenheit eines Objekts (32) in dem ersten Erfassungsbereich (40) anzeigt, und wobei, falls das erste Erfassungsereignis erkannt wird, das Hochfrequenzsystem (100; 500, 500') ferner konfiguriert ist:
- zum Durchführen der hochfrequenzbasierten Erfassung durch die zweite Gruppe in einem zweiten Erfassungsbereich (60), der sich mindestens teilweise mit dem ersten Erfassungsbereich (40) überlappt, zum Erkennen eines zweiten Erfassungsereignisses, das eine Aktivität des Objekts (32) anzeigt.

2. Hochfrequenzsystem (100; 500, 500') nach Anspruch 1, wobei das Hochfrequenzsystem (100; 500, 500') derart zum Bilden der ersten Gruppe von Knoten konfiguriert ist, dass die erste Gruppe den mindestens einen Knoten (10) der dichten Knotenanordnung (26) und mindestens einen Knoten (27, 28, 29, 30) enthält, der nicht in der dichten Knotenanordnung (26) enthalten ist.

3. Hochfrequenzsystem (100; 500, 500') nach Anspruch 1 oder 2,
wobei, sobald das erste Erfassungsereignis detektiert wird, das Hochfrequenzsystem (100; 500, 500') zum Durchführen der hochfrequenzbasierten Erfassung in einem dritten Erfassungsbereich (50) durch mindestens den mindestens einen Knoten (10) der ersten Gruppe zum Detektieren eines dritten Erfassungsereignisses konfiguriert ist, das eine Position des Objekts (32) innerhalb einer Nähe der dichten Knotenanordnung (26) anzeigt, wobei sich der dritte Erfassungsbereich (50) mindestens teilweise mit dem ersten Erfassungsbereich (40) und dem zweiten Erfassungsbereich (60) überlappt, und wobei das Hochfrequenzsystem (100; 500, 500') zum Durchführen der hochfrequenzbasierten Erfassung durch die zweite Gruppe an der Position des Objekts (32) zum Erkennen des zweiten Erfassungsereignisses konfiguriert ist, falls das erste Erfassungsereignis detektiert wird und sobald das dritte Erfassungsereignis detektiert wird.

4. Hochfrequenzsystem nach Anspruch 3, wobei das Hochfrequenzsystem (100; 500, 500') zum Bilden der zweiten Gruppe, sobald das dritte Erfassungsereignis detektiert wird und basierend auf der Position des Objekts (32) konfiguriert ist.

5. Hochfrequenzsystem (100; 500, 500') nach mindestens einem der Ansprüche 1 bis 4, wobei das Hochfrequenzsystem (100; 500, 500') zum Anpassen einer Nachrichtenfrequenz zum Übertragen von Hochfrequenznachrichten durch die Knoten (10, ..., 30) des Hochfrequenzsystems (100; 500, 500') zum Durchführen der hochfrequenzbasierten Erfassung, einer Gerichtetheit von Hochfrequenznachrichtenübertragungen oder sowohl der Nachrichtenfrequenz zum Übertragen von Hochfrequenznachrichten durch die Knoten (10, ..., 30) des Hochfrequenzsystems (100; 500, 500') zum Durchführen der hochfrequenzbasierten Erfassung und der Gerichtetheit der Hochfrequenznachrichtenübertragungen, basierend darauf, welches Erfassungsereignis durch die Knoten (10, ..., 30) detektiert oder erkannt werden soll, konfiguriert ist.

6. Hochfrequenzsystem (100; 500, 500') nach mindestens einem der Ansprüche 1 bis 5, wobei das Hochfrequenzsystem (100; 500, 500') konfiguriert ist, um, während es die hochfrequenzbasierte Erfassung durch die zweite Gruppe in dem zweiten Erfassungsbereich (60) zum Erkennen des zweiten Erfassungsereignisses durchführt, das Durchführen der hochfrequenzbasierten Erfassung zum Detektieren beliebiger anderer Erfassungsereignisse in dem zweiten Erfassungsbereich (60) zu stoppen.

7. Hochfrequenzsystem (100; 500, 500') nach mindestens einem der Ansprüche 1 bis 6, wobei das Hochfrequenzsystem (100; 500, 500') zum Durchführen der hochfrequenzbasierten Erfassung durch die zweite Gruppe in dem zweiten Erfassungsbereich (60) zum Erkennen des zweiten Erfassungsereignisses konfiguriert ist, bis eine Stoppbedingung erfüllt ist, die eine oder mehrere enthält von,
- dass das zweite Ereignis erkannt wird,
- dass ein Stoppereignis detektiert wird,
- dass eine zuvor bestimmte Dauer vergangen ist, seit die zweite Gruppe mit der hochfrequenzbasierten Erfassung in dem zweiten Erfassungsbereich (60) zum Erkennen des zweiten Erfassungsereignisses begonnen hat, und - dass eine Inaktivität des Objekts (32) erkannt wird.

8. Hochfrequenzsystem (100; 500, 500') nach mindestens einem der Ansprüche 1 bis 7, wobei das Hochfrequenzsystem (100; 500, 500') zum Durchführen der hochfrequenzbasierten Erfassung zum Detektieren des ersten Erfassungsereignisses oder des dritten Erfassungsereignisses konfiguriert ist, wenn die zweite Gruppe das Durchführen der hochfrequenzbasierten Erfassung zum Detektieren des zweiten Erfassungsereignisses stoppt.

9. Hochfrequenzsystem (100; 500, 500') nach mindestens einem der Ansprüche 1 bis 8, wobei das Hochfrequenzsystem (100; 500, 500') zum Durchführen einer Aktion basierend auf dem detektierten ersten Erfassungsereignis, dem detektierten dritten Erfassungsereignis, dem erkannten zweiten Erfassungsereignis und/oder Kontextinformationen konfiguriert ist.

10. Hochfrequenzsupersystem (1000), das zwei oder mehr Hochfrequenzsysteme (500, 500') nach mindestens einem der Ansprüche 1 bis 9 derart enthält, dass das HF-Supersystem (1000) zwei oder mehr dichte Knotenanordnungen (26, 26') an verschiedenen Positionen enthält.

11. Verfahren zum Durchführen der hochfrequenzbasierten Erfassung in einem Hochfrequenzsystem (100; 500, 500'), umfassend mehrere Knoten (10, ..., 30) zum Durchführen der hochfrequenzbasierten Erfassung, wobei mindestens zwei der mehreren Knoten (10, ..., 30) in einer dichten Knotenanordnung (26) enthalten sind, wobei die dichte Knotenanordnung eine Mehrknotenvorrichtung und/oder eine Gruppe dicht gepackter Knoten umfasst;
wobei das Verfahren die Schritte umfasst:
- Bilden einer ersten Gruppe von Knoten, die mindestens einen Knoten (10) der dichten Knotenanordnung (26) enthält,
- Bilden einer zweiten Gruppe von Knoten, die den mindestens einen Knoten (10) der ersten Gruppe und mindestens einen weiteren Knoten (10) der dichten Knotenanordnung (26) enthält,
- Durchführen der hochfrequenzbasierten Erfassung durch die erste Gruppe in einem ersten Erfassungsbereich (40) zum Detektieren eines ersten Erfassungsereignisses, das eine Anwesenheit eines Objekts (32) in dem ersten Erfassungsbereich (40) anzeigt, und wobei, falls das erste Erfassungsereignis erkannt wird, das Verfahren den Schritt umfasst
- Durchführen der hochfrequenzbasierten Erfassung durch die zweite Gruppe in einem zweiten Erfassungsbereich (60), der sich mindestens teilweise mit dem ersten Erfassungsbereich (40) überlappt, zum Erkennen eines zweiten Erfassungsereignisses, das eine Aktivität des Objekts (32) anzeigt.

12. Verfahren nach Anspruch 11, wobei die erste Gruppe derart gebildet wird, dass die erste Gruppe den mindestens einen Knoten (10) der dichten Knotenanordnung (26) und mindestens einen Knoten (27, 28, 29, 30) enthält, der nicht in der dichten Knotenanordnung (26) enthalten ist.

13. Verfahren nach Anspruch 11 oder 12, umfassend einen oder mehrere der Schritte:
- sobald das erste Erfassungsereignis detektiert wird, Durchführen der hochfrequenzbasierten Erfassung in einem dritten Erfassungsbereich (50) durch mindestens den mindestens einen Knoten (10, ..., 30) der ersten Gruppe zum Erkennen eines dritten Erfassungsereignisses, das eine Position des Objekts (32) innerhalb der Nähe der dichten Knotenanordnung (26) anzeigt, wobei sich der dritte Erfassungsbereich (50) mindestens teilweise mit dem ersten Erfassungsbereich (40) und dem zweiten Erfassungsbereich (60) überlappt, und wobei die hochfrequenzbasierte Erfassung, die durch die zweite Gruppe durchgeführt wird, an der Position des Objekts (32) zum Erkennen des zweiten Erfassungsereignisses durchgeführt wird, falls das erste Erfassungsereignis detektiert wird und sobald das dritte Erfassungsereignis detektiert wird,
- Bilden der zweiten Gruppe, sobald das dritte Erfassungsereignis erkannt wird und basierend auf der Position des Objekts (32),
- Bilden der ersten Gruppe durch Auswählen der Knoten (10, ..., 30), die in der ersten Gruppe enthalten sein sollen, basierend auf einem oder mehreren Hochfrequenzsystemparametern und/oder dem zweiten Erfassungsereignis, das durch die zweite Gruppe erkannt werden soll,
- Bilden der zweiten Gruppe durch Auswählen des mindestens einen weiteren Knotens (10) der dichten Knotenanordnung (26), der zusätzlich zu den Knoten (10, ..., 30) der ersten Gruppe in der zweiten Gruppe enthalten sein soll, basierend auf einem oder mehreren Hochfrequenzsystemparametern und/oder dem zweiten Erfassungsereignis, das durch die zweite Gruppe erkannt werden soll,
- Anpassen einer Nachrichtenfrequenz zum Übertragen von Hochfrequenznachrichten durch die Knoten (10, ..., 30) des Hochfrequenzsystems (100; 500, 500') zum Durchführen der hochfrequenzbasierten Erfassung basierend darauf, welches Erfassungsereignis durch die Knoten (10, ..., 30) detektiert oder erkannt werden soll,
- Anpassen einer Gerichtetheit von Hochfrequenznachrichten durch die Knoten (10, ..., 30) des Hochfrequenzsystems (100; 500, 500') zum Durchführen der hochfrequenzbasierten Erfassung basierend darauf, welches Erfassungsereignis durch die Knoten (10, ..., 30) detektiert oder erkannt werden soll,
- während die hochfrequenzbasierte Erfassung durch die zweite Gruppe in dem zweiten Erfassungsbereich zum Erkennen des zweiten Erfassungsereignisses durchgeführt wird, Stoppen des Durchführens der hochfrequenzbasierten Erfassung zum Detektieren beliebiger anderer Erfassungsereignisse in dem zweiten Erfassungsbereich (60),
- Durchführen einer hochfrequenzbasierten Erfassung durch die zweite Gruppe in dem zweiten Erfassungsbereich (60) zum Erkennen des zweiten Erfassungsereignisses, bis eine Stoppbedingung erfüllt ist, wobei die Stoppbedingung eine oder mehrere enthält von, dass das zweite Ereignis erkannt wird, dass ein Stoppereignis detektiert wird, dass eine zuvor bestimmte Dauer vergangen ist, seit die zweite Gruppe mit der hochfrequenzbasierten Erfassung in dem zweiten Erfassungsbereich (60) zum Erkennen des zweiten Erfassungsereignisses begonnen hat, und dass eine Inaktivität des Objekts (32) erkannt wird,
- Durchführen einer hochfrequenzbasierten Erfassung zum Detektieren des ersten Erfassungsereignisses oder des dritten Erfassungsereignisses, wenn die zweite Gruppe stoppt, die hochfrequenzbasierte Erfassung zum Detektieren des zweiten Erfassungsereignisses durchzuführen, und
- Durchführen einer Aktion basierend auf den detektierten ersten Erfassungsereignissen, dem detektierten dritten Erfassungsereignis, dem erkannten zweiten Erfassungsereignis und/oder Kontextinformationen.

14. Computerprogrammprodukt zum Durchführen der hochfrequenzbasierten Erfassung in einem Hochfrequenzsystem (100; 500, 500'), umfassend mehrere Knoten (10, ..., 30) zum Durchführen der hochfrequenzbasierten Erfassung, wobei mindestens zwei der mehreren Knoten (10, ..., 30) in einer dichten Knotenanordnung (26) enthalten sind, wobei das Computerprogrammprodukt Programmcodemittel, umfasst, um einen Prozessor zu veranlassen, das Verfahren nach mindestens einem der Ansprüche 11 bis 13 auszuführen, wenn das Computerprogrammprodukt auf dem Prozessor abläuft.

15. Computerlesbares Medium, das das Computerprogrammprodukt nach Anspruch 14 gespeichert aufweist.

## Revendications

1. Système de radiofréquence (100 ; 500, 500') comprenant de multiples nœuds (10, 27, 28, 29, 30) permettant de réaliser une détection par radiofréquence, dans lequel au moins deux des multiples nœuds (10, ..., 30) sont inclus dans un agencement de nœud dense (26),
dans lequel l'agencement de nœud dense comprend un dispositif à nœuds multiples et/ou un groupe de nœuds densément regroupés ; et
dans lequel le système de radiofréquence (100 ; 500, 500') est configuré :
- pour former un premier groupe de nœuds (10, ..., 30) comportant au moins un nœud (10) de l'agencement de nœud dense (26),
- pour former un second groupe de nœuds (10, ..., 30) comportant l'au moins un nœud (10) du premier groupe et au moins un nœud supplémentaire (10) de l'agencement de nœud dense (26),
- pour réaliser une détection par radiofréquence par le premier groupe dans une première zone de détection (40) afin de détecter un premier événement de détection indiquant une présence d'un objet (32) dans la première zone de détection (40), et dans lequel, si le premier événement de détection est détecté, le système de radiofréquence (100 ; 500, 500') est en outre configuré :
- pour réaliser une détection par radiofréquence par le second groupe dans une deuxième zone de détection (60) chevauchant au moins partiellement la première zone de détection (40) pour reconnaître un deuxième événement de détection indiquant une activité de l'objet (32).

2. Système de radiofréquence (100 ; 500, 500') selon la revendication 1, dans lequel le système de radiofréquence (100 ; 500, 500') est configuré pour former le premier groupe de nœuds de manière à inclure l'au moins un nœud (10) de l'agencement de nœud dense (26) et au moins un nœud (27, 28, 29, 30) qui n'est pas inclus dans l'agencement de nœud dense (26).

3. Système de radiofréquence (100 ; 500, 500') selon la revendication 1 ou 2,
dans lequel, lors de la détection du premier événement de détection, le système de radiofréquence (100 ; 500, 500') est configuré pour réaliser une détection par radiofréquence dans une troisième zone de détection (50) par au moins l'au moins un nœud (10) du premier groupe pour détecter un troisième événement de détection indiquant un emplacement de l'objet (32) à proximité de l'agencement de nœud dense (26), la troisième zone de détection (50) chevauchant au moins partiellement la première zone de détection (40) et la deuxième zone de détection (60), et
dans lequel le système de radiofréquence (100 ; 500, 500') est configuré pour réaliser la détection par radiofréquence par le second groupe au niveau de l'emplacement de l'objet (32) pour reconnaître le deuxième événement de détection si le premier événement de détection est détecté et lors de la détection du troisième événement de détection.

4. Système de radiofréquence selon la revendication 3, dans lequel le système de radiofréquence (100 ; 500, 500') est configuré pour former le second groupe lors de la détection du troisième événement de détection et en fonction de l'emplacement de l'objet (32).

5. Système de radiofréquence (100 ; 500, 500') selon au moins l'une des revendications 1 à 4, dans lequel le système de radiofréquence (100 ; 500, 500') est configuré pour ajuster une fréquence de message pour la transmission de messages radiofréquence par les nœuds (10, ..., 30) du système de radiofréquence (100 ; 500, 500') afin de réaliser une détection par radiofréquence, une directionnalité des transmissions de message radiofréquence, ou à la fois la fréquence de message pour transmettre des messages radiofréquence par les nœuds (10, ..., 30) du système de radiofréquence (100 ; 500, 500') pour réaliser une détection par radiofréquence et la directionnalité des transmissions de message radiofréquence, en fonction de l'événement de détection qui doit être détecté ou reconnu par les nœuds (10, ..., 30).

6. Système de radiofréquence (100 ; 500, 500') selon au moins l'une parmi les revendications 1 à 5, dans lequel le système de radiofréquence (100 ; 500, 500') est configuré pendant la réalisation d'une détection par radiofréquence par le second groupe dans la deuxième zone de détection (60) pour reconnaître le deuxième événement de détection, afin d'arrêter la réalisation de la détection par radiofréquence pour détecter tout autre événement de détection dans la deuxième zone de détection (60).

7. Système de radiofréquence (100 ; 500, 500') selon au moins l'une des revendications 1 à 6, dans lequel le système de radiofréquence (100 ; 500, 500') est configuré pour réaliser une détection par radiofréquence par le second groupe dans la deuxième zone de détection (60) afin de reconnaître le deuxième événement de détection jusqu'à ce qu'une condition d'arrêt soit remplie comportant une ou plusieurs des conditions suivantes : le deuxième événement est reconnu,
- un événement d'arrêt est détecté,
- une durée prédéterminée s'est écoulée depuis que le second groupe a commencé la détection par radiofréquence dans la deuxième zone de détection (60) pour reconnaître le deuxième événement de détection, et -
- une inactivité de l'objet (32) est reconnue.

8. Système de radiofréquence (100 ; 500, 500') selon au moins l'une des revendications 1 à 7, dans lequel le système de radiofréquence (100 ; 500, 500') est configuré pour réaliser une détection par radiofréquence afin de détecter le premier événement de détection ou le troisième événement de détection lorsque le second groupe arrête la réalisation d'une détection par radiofréquence afin de détecter le deuxième événement de détection.

9. Système de radiofréquence (100 ; 500, 500') selon au moins l'une des revendications 1 à 8, dans lequel le système de radiofréquence (100 ; 500, 500') est configuré pour réaliser une action en fonction du premier événement de détection détecté, du troisième événement de détection détecté, du deuxième événement de détection reconnu, et/ou d'informations contextuelles.

10. Super-système de radiofréquence (1000) comportant au moins deux systèmes de radiofréquence (500, 500') selon au moins l'une des revendications 1 à 9, de telle sorte que le super-système RF (1000) comporte au moins deux agencements de nœud dense (26, 26') à des emplacements différents.

11. Procédé de réalisation d'une détection par radiofréquence dans un système de radiofréquence (100 ; 500, 500') comprenant de multiples nœuds (10, ..., 30) pour réaliser une détection par radiofréquence, dans lequel au moins deux des multiples nœuds (10, ..., 30) sont inclus dans un agencement de nœud dense (26), dans lequel l'agencement de nœud dense comprend un dispositif à nœuds multiples et/ou un groupe de nœuds densément regroupés ;
dans lequel le procédé comprenant les étapes consistant à :
- former un premier groupe de nœuds comportant au moins un nœud (10) de l'agencement de nœud dense (26),
- former un second groupe de nœuds comportant l'au moins un nœud (10) du premier groupe et au moins un nœud supplémentaire (10) de l'agencement de nœud dense (26),
- réaliser une détection par radiofréquence par le premier groupe dans une première zone de détection (40) pour détecter un premier événement de détection indiquant une présence d'un objet (32) dans la première zone de détection (40), et dans lequel, si le premier événement de détection est détecté, le procédé comprend l'étape consistant à réaliser une détection par radiofréquence par le second groupe dans une deuxième zone de détection (60) chevauchant au moins partiellement la première zone de détection (40) pour reconnaître un deuxième événement de détection indiquant une activité de l'objet (32).

12. Procédé selon la revendication 11, dans lequel le premier groupe est formé de manière à inclure l'au moins un nœud (10) de l'agencement de nœud dense (26) et au moins un nœud (27, 28, 29, 30) qui n'est pas inclus dans l'agencement de nœud dense (26).

13. Procédé selon la revendication 11 ou 12, comprenant une ou plusieurs des étapes consistant à :
- lors de la détection du premier événement de détection, réaliser une détection par radiofréquence dans une troisième zone de détection (50) par au moins l'au moins un nœud (10, ..., 30) du premier groupe pour détecter un troisième événement de détection indiquant un emplacement de l'objet (32) à proximité de l'agencement de nœud dense (26), la troisième zone de détection (50) chevauchant au moins partiellement la première zone de détection (40) et la deuxième zone de détection (60), et dans lequel la détection par radiofréquence réalisée par le second groupe est réalisée au niveau de l'emplacement de l'objet (32) pour reconnaître le deuxième événement de détection si le premier événement de détection est détecté et lors de la détection du troisième événement de détection,
- former le second groupe lors de la détection du troisième événement de détection et en fonction de l'emplacement de l'objet (32),
- former le premier groupe en sélectionnant les nœuds (10, ..., 30) à inclure dans le premier groupe en fonction d'un ou plusieurs paramètres du système de radiofréquence et/ou du deuxième événement de détection à reconnaître par le second groupe,
- former le second groupe en sélectionnant l'au moins un nœud supplémentaire (10) de l'agencement de nœud dense (26) à inclure dans le second groupe en plus des nœuds (10, ..., 30) du premier groupe en fonction d'un ou plusieurs paramètres du système de radiofréquence et/ou du deuxième événement de détection à reconnaître par le second groupe,
- ajuster une fréquence de message pour la transmission de messages radiofréquence par les nœuds (10, ..., 30) du système de radiofréquence (100 ; 500, 500') pour réaliser une détection par radiofréquence en fonction de l'événement de détection qui doit être détecté ou reconnu par les nœuds (10, ..., 30),
- ajuster une directionnalité des messages radiofréquence par les nœuds (10, ..., 30) du système de radiofréquence (100 ; 500, 500') pour réaliser une détection par radiofréquence en fonction de l'événement de détection qui doit être détecté ou reconnu par les nœuds (10, ..., 30),
- pendant la réalisation d'une détection par radiofréquence par le second groupe dans la deuxième zone de détection pour reconnaître le deuxième événement de détection, arrêter la réalisation d'une détection par radiofréquence pour détecter tout autre événement de détection dans la deuxième zone de détection (60),
- réaliser une détection par radiofréquence par le second groupe dans la deuxième zone de détection (60) pour reconnaître le deuxième événement de détection jusqu'à ce qu'une condition d'arrêt soit remplie, dans lequel la condition d'arrêt comporte une ou plusieurs des conditions suivantes : le deuxième événement est reconnu, un événement d'arrêt est détecté, une durée prédéterminée s'est écoulée depuis que le second groupe a commencé la détection par radiofréquence dans la deuxième zone de détection (60) pour reconnaître le deuxième événement de détection, et une inactivité de l'objet (32) est reconnue,
- réaliser une détection par radiofréquence pour détecter le premier événement de détection ou le troisième événement de détection lorsque le second groupe arrête la réalisation d'une détection par radiofréquence pour détecter le deuxième événement de détection, et
- réaliser une action en fonction des premiers événements de détection détectés, du troisième événement de détection détecté, du deuxième événement de détection reconnu et/ou des informations contextuelles.

14. Produit-programme informatique permettant de réaliser une détection par radiofréquence dans un système de radiofréquence (100 ; 500, 500') comprenant de multiples nœuds (10, ..., 30) pour réaliser une détection par radiofréquence, dans lequel au moins deux des multiples nœuds (10, ..., 30) sont inclus dans un agencement de nœud dense (26), dans lequel le produit-programme informatique comprend un moyen de code de programme pour amener un processeur à mettre en œuvre le procédé selon au moins l'une des revendications 11 à 13, lorsque le produit-programme informatique est exécuté sur le processeur.

15. Support lisible par ordinateur sur lequel est stocké le produit-programme informatique selon la revendication 14.
